# EUROPEAN PATENT SPECIFICATION

(11) **EP 3 862 866 B1**
(45) Date of publication and mention of the grant of the patent: **17.04.2024**
(21) Application number: 21151327.0
(22) Date of filing: 13.01.2021
(51) Int. Cl.: G06F 3/12, B41J 3/407

(54) **STATE MONITORING IN PRINTER SYSTEM**
ZUSTANDSÜBERWACHUNG IN EINEM DRUCKERSYSTEM
SURVEILLANCE D'ÉTAT DANS UN SYSTÈME D'IMPRIMANTE

(30) Priority: 04.02.2020 JP 2020016709
(43) Date of publication of application: 11.08.2021
(73) Proprietor: Toshiba TEC Kabushiki Kaisha, Tokyo 141-8562 (JP)
(72) Inventor: Goto, Takashi, Tokyo, 141-8562 (JP)
(74) Representative: Hoffmann Eitle

(56) References cited:
- US-A- 5 751 923
- US-A1- 2003 103 081

## Description

### FIELD

Embodiments described herein relate generally to state monitoring in printer systems including a printer and a host computer.

### BACKGROUND

In the related art, if a host computer instructs a printer to execute a printing operation, the progress of the printing operation is monitored by a printer driver installed in the host computer. That is, the printer driver monitors the states of the host computer, the printer, and a communication connection between host computer and printer. The printer driver can display the results of the state monitor and notify a user of the progress of the printing operation.

However, if there is a problem with communication connection, the printer driver is not be able monitor the state of the printer. Therefore, it is not possible to identify whether the problem is solely with the communication connection or also with the printer. As a result, the progress of a printing operation might not be fully monitored, and thus it may take a significant amount of time to investigate all possible causes of a printing failure if a problem occurs during a printing operation.

US 2003/103081 A1 relates to a printing system that displays information to an operator indicating that printing has been halted even when it is the host computer that causes the halt in printing. When a print data preview is set, a print processor reads print data from a spool file, generates a preview image using a printer graphics driver and provides that preview image to a previewer. A status monitor then monitors and displays the status of a printer and the print processor.

US 5 751 923 A relates to a bidirectional printer interface comprising a print monitoring controller provided for a host unit for controlling a printer connected to the host unit to monitor a print state; an analyzer provided for the printer for analyzing environment data for setting a print environment and print data; a storage provided the printer for analyzing storing the print data analyzed by the analyzer; wherein the analyzer compares data in relation to a print environment included in the print data with the environment data stored in the storage to determine the presence of the difference therebetween, and if the difference between the data is detected, the analyzer transmits the content of the difference between the data to the host unit and wherein the printer monitoring controller notifies the user of the content of the difference between the data transmitted from the analyzer.

### SUMMARY OF THE INVENTION

One of the objects of the present invention is to improve prior art techniques and overcome at least some of the prior art problems as for instance above illustrated.

According to a first aspect of the invention, it is provided a printer system according to claim 1.

Optionally, in the printer system according to the first aspect of the invention, the operation state of the host computer determined through the first monitoring operation includes a same operation state parameter as the operation state of the host computer determined through the second monitoring operation.

Optionally, in the printer system according to the first aspect of the invention, the operation state of the printer computer determined through the first monitoring operation includes a same operation state parameter as the operation state of the printer determined through the second monitoring operation.

Optionally, in the printer system according to the first aspect of the invention, the communication state of the communication line determined through the first monitoring operation includes a same communication state parameter as the communication state of the communication line determined through the second monitoring operation.

Optionally, in the printer system according to the first aspect of the invention, the operation state of the host computer determined through the second monitoring operation includes an amount of print data recognized by the second control unit as being transmitted from the host computer and an amount of print data recognized by the second control unit as being received by the printer.

Optionally, in the printer system according to the first aspect of the invention, the first control unit of the host computer starts the first monitoring operation upon transmission of a print instruction to the printer, and the second control unit of the printer starts the second monitoring operation upon reception of the print instruction from the host computer.

According to a second aspect of the invention, it is provided a printer system according to claim 7.

Optionally, in the printer system according to the second aspect of the invention, the operation state of the host computer determined through the first monitoring operation includes a same operation state parameter as the operation state of the host computer determined through the second monitoring operation.

Optionally, in the printer system according to the second aspect of the invention, the operation state of the printer computer determined through the first monitoring operation includes a same operation state parameter as the operation state of the printer determined through the second monitoring operation.

Optionally, in the printer system according to the second aspect of the invention, the communication state of the communication line determined through the first monitoring operation includes a same communication state parameter as the communication state of the communication line determined through the second monitoring operation.

Optionally, in the printer system according to the second aspect of the invention, the operation state of the host computer determined through the second monitoring operation includes an amount of print data recognized by the second control unit as being transmitted from the host computer and an amount of print data recognized by the second control unit as being received by the printer.

Optionally, in the printer system according to the second aspect of the invention, the first control unit of the host computer starts the first monitoring operation upon transmission of a print instruction to the printer, and the second control unit of the printer starts the second monitoring operation upon reception of the print instruction from the host computer.

Optionally, in the printer system according to the second aspect of the invention, the display displays the result of the first monitoring operation and the result of second monitoring operation received on a same screen.

According to a third aspect of the invention, it is provided a printer system according to claim 14.

Optionally, in the printer system according to the third aspect of the invention, the operation state of the host computer determined through the first monitoring operation includes a same operation state parameter as the operation state of the host computer determined through the second monitoring operation.

Optionally, in the printer system according to the third aspect of the invention, the operation state of the printer computer determined through the first monitoring operation includes a same operation state parameter as the operation state of the printer determined through the second monitoring operation.

Optionally, in the printer system according to the third aspect of the invention, the communication state of the communication line determined through the first monitoring operation includes a same communication state parameter as the communication state of the communication line determined through the second monitoring operation.

Optionally, in the printer system according to the third aspect of the invention, the operation state of the host computer determined through the second monitoring operation includes an amount of print data recognized by the second control unit as being transmitted from the host computer and an amount of print data recognized by the second control unit as being received by the printer.

Optionally, in the printer system according to the third aspect of the invention, the first control unit of the host computer starts the first monitoring operation upon transmission of a print instruction to the printer, and the second control unit of the printer starts the second monitoring operation upon reception of the print instruction from the host computer.

Optionally, in the printer system according to the third aspect of the invention, the display displays the result of the first monitoring operation and the result of second monitoring operation received on a same screen.

### DESCRIPTION OF THE DRAWINGS

FIG. 1 is a block diagram illustrating a schematic configuration of a label printer system according to a first embodiment.
FIG. 2 schematically illustrates a label printer according to a first embodiment.
FIG. 3 is a block diagram illustrating aspects of a hardware configuration of a label printer of a first embodiment.
FIG. 4 is a block diagram illustrating aspects of a hardware configuration of a host computer of a first embodiment.
FIG. 5 is a block diagram illustrating aspects of a functional configuration of a label printer system according to a first embodiment.
FIG. 6 depicts an example of parameters monitored by a first monitoring unit.
FIG. 7 depicts an example of parameters monitored by a second monitoring unit.
FIG. 8 is a flowchart of a process performed by a label printer system according to a first embodiment.
FIG. 9 depicts a schematic configuration of a label printer system according to a second embodiment.
FIG. 10 depicts aspects of a functional configuration of a label printer system according to a second embodiment.
FIG. 11 is a flowchart of a process performed by a label printer system according to a second embodiment.
FIG. 12 depicts a schematic configuration of a label printer system according to a third embodiment.
FIG. 13 depicts aspects of a functional configuration of a label printer system according to a third embodiment.
FIG. 14 is a flowchart of a process performed by a label printer system according to a third embodiment.

### DETAILED DESCRIPTION

In general, according to an embodiment, a printer system includes a host computer configured to generate and transmit print data and a printer connected to the host computer via a communication line and configured to receive the print data and perform printing based on the print data. The host computer of an embodiment includes a first communication interface connected to the printer, a first display, and a first control unit configured to perform a first monitoring operation to determine operation states of the host computer and the printer and a communication state of the communication line in association with a monitored time, and control the first display to display a result of the first monitoring operation. The printer of an embodiment includes a second communication interface connected to the host computer, a second display, and a second control unit configured to perform a second monitoring operation to determine operation states of the host computer and the printer and a communication state of the communication line in association with a monitored time, and control the second display to display a result of the second monitoring operation.

A host computer in an embodiment includes a first communication interface connected to the printer, a display, and a first control unit configured to perform a first monitoring operation to determine operation states of the host computer and the printer and a communication state of the communication line in association with a monitored time. The printer of an embodiment includes a second communication interface connected to the host computer, and a second control unit configured to perform a second monitoring operation to determine operation states of the host computer and the printer and a communication state of the communication line in association with a monitored time, and control the second communication interface to transmit a result of the second monitoring operation to the host computer via the communication line. The first control unit is configured to control the display to display a result of the first monitoring operation and the result of second monitoring operation received from the printer.

A printer system of an embodiment includes a printer and a host computer connected via a communication unit. The host computer includes a first monitoring unit and a second transmitting unit. The first monitoring unit monitors states of the host computer, the printer, and the communication unit in correlation with time. The second transmitting unit transmits the monitoring result of the first monitoring unit to the printer. The printer includes a second monitoring unit, a second receiving unit, and a display control unit. The second monitoring unit monitors the states of the printer, the host computer, and the communication unit in correlation with time. The second receiving unit receives the monitoring result from the first monitoring unit. The display control unit displays monitoring results from the first monitoring unit and the second monitoring unit.

### (First embodiment)

A label printer system 18a according to a first embodiment is described.

### (Description of overall configuration of a label printer system)

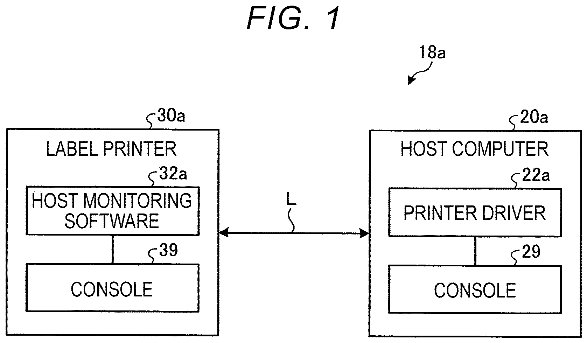

With reference to FIG. 1, an overall configuration of the label printer system 18a is described. FIG. 1 is a block diagram illustrating a schematic configuration of the label printer system according to the first embodiment. The label printer system 18a includes a host computer 20a and a label printer 30a. The host computer 20a is, for example, a personal computer (PC), a mobile terminal, an information terminal, a hand-held terminal, a point of sales (POS) terminal, or the like. The host computer 20a and the label printer 30a are connected to each other via a communication line L, such as a wireless LAN (Local Area Network) or short-range wireless communication, and can thus exchange information therebetween. The communication line L may be a wired communication line in some examples. A wired communication connection and a wireless communication connection may both be referred to as a "communication line." Thus, in the present description, "communication line L" should be understood to refer to either and/or both of wireless communication connection and wired communication connection. The label printer system 18a is one example of a printer system.

The host computer 20a, reads a code (e.g., barcode or the like) on an item of merchandise and transmits, via the communication line L, merchandise information (e.g., a merchandise name, price, and the like) according to the code value read to the label printer 30a to be printed on a label . Specifically, in this example, the host computer 20a transmits, merchandise information in a command format to the label printer 30a. The host computer 20a includes a printer driver 22a and a console 29.

The printer driver 22a is software for controlling the label printer 30a. Specifically, the printer driver 22a has a function of designating print data to be printed by the label printer 30a, a function of transmitting the print information to the label printer 30a, a function of monitoring operation states of the label printer 30a, the host computer 20a, and the communication line L. Particularly, in order to monitor the state of the label printer 30a, the printer driver 22a has a function of sending an inquiry (request) to the label printer 30a regarding the state.

The console 29 can include a display unit with a touch panel (operation unit) for receiving input operation instructions at the host computer 20a. The display unit (or another display unit) can be used for displaying information from the host computer 20a. The console 29 may further include other user input devices (operation units) or the like. Specifically, the console 29 of this example includes a liquid crystal display monitor as a display unit and a keyboard as an operation unit. Instead of the keyboard, or in additional to the keyboard, a touch panel can be integrated with the liquid crystal display monitor.

The label printer 30a is, in this example, a thermal printer that prints text and graphics, on a label paper and dispenses the printed label paper after printing. The printing can be executed, for example, by pressing a thermal head against thermal paper. The label printer 30a may be a thermal transfer printer that transfers heat sublimating pigment ink of an ink ribbon onto the label paper by use of a heated thermal head.

The label printer 30a includes host monitoring software 32a and a console 39. The host monitoring software 32a is software that monitors states of the label printer 30a, the host computer 20a, and the communication line L.

The console 39 includes a display unit and an operation unit by which instructions related to operations of the label printer 30a can be input. The display unit displays the operation state of the label printer 30a, the operation state of the host computer 20a, and the like. Specifically, in this example, the console 39 includes a liquid crystal monitor as a display unit and a keyboard or keypad as an operation unit. Instead of the keyboard, in some examples, a touch panel can be integrated with the liquid crystal monitor.

### (Description of schematic structure of label printer)

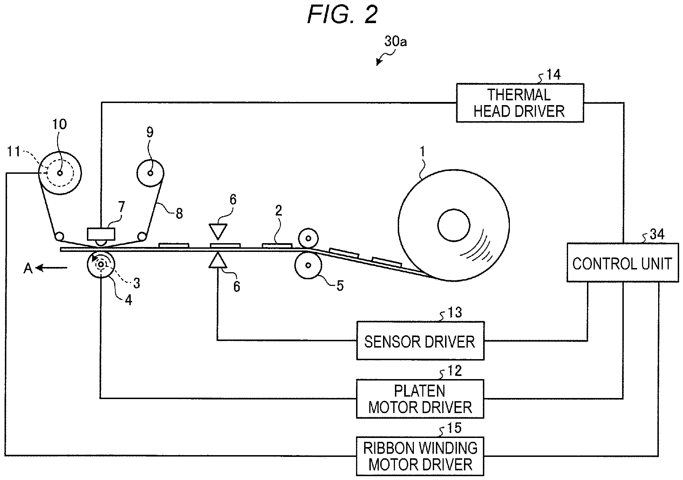

A schematic structure of the label printer 30a is described with reference to FIG. 2. FIG. 2 schematically illustrates an example of a structure of a label printer. Here, the label printer 30a is of a thermal transfer type that executes printing by using an ink ribbon.

The label printer 30a unrolls a label paper 1 that has been wound in a roll shape and executes printing on a label 2 attached to the label paper 1 while conveying along a conveyance path through the label printer 30a.

As illustrated in FIG. 2, the label printer 30a conveys the labels 2 in a conveyance direction A by a rotational driving force of a platen roller 4 driven by a platen motor 3. The platen motor 3 is driven by a platen motor driver 12.

The label printer 30a includes a conveyance roller 5, a mark sensor 6, the platen roller 4, the platen motor 3, and a thermal head 7 in this order from the upstream side of the conveyance path.

The conveyance roller 5 rotates with the movement of the label 2 and guides the label 2 along a predetermined conveyance path.

The mark sensor 6 is a reflective or transmissive optical sensor that optically detects a mark at a reference position provided on the label paper 1 corresponding to a position of a label 2. The mark sensor 6 is controlled by a sensor driver 13 to scan the front surface or the back surface of the label paper 1 being conveyed on the conveyance path in the conveyance direction A. The mark sensor 6 detects a black mark as a reference position on the label paper 1. The label printer 30a identifies the position of the label paper 1 based on the detection result of the black mark(s).

The thermal head 7 is connected to a thermal head driver 14. An ink ribbon 8 is interposed between the thermal head 7 and the platen roller 4. The ink ribbon 8 is fed from unused ink ribbon wound around a ribbon holding shaft 9 to a ribbon winding shaft 10 after use. The ribbon winding shaft 10 is rotationally driven by a ribbon winding motor 11. The ribbon winding motor 11 is controlled by a ribbon winding motor driver 15. Then, the ink on the ink ribbon 8 is transferred to the label 2 by the heated thermal head 7.

The label 2 on which printing has been completed can be released from the label paper 1 and then attached to a product such as a corresponding items of merchandise.

### (Description of hardware configuration of label printer)

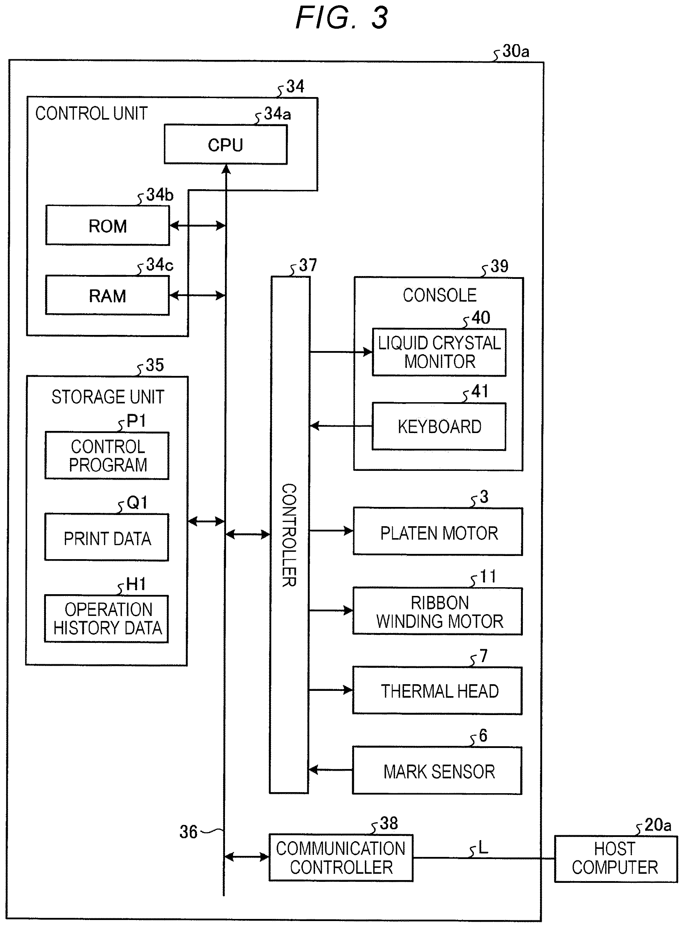

The hardware configuration of the label printer 30a is described with reference to FIG. 3. FIG. 3 is a block diagram illustrating an example of a hardware configuration of the label printer of the first embodiment.

The label printer 30a includes a control unit 34, a storage unit 35, a controller 37, and a communication controller 38.

The control unit 34 is connected to the storage unit 35, the controller 37, and the communication controller 38 via an internal bus 36. The control unit 34 includes a central processing unit (CPU) 34a, a read only memory (ROM) 34b, and a random access memory (RAM) 34c.

The CPU 34a is connected to the ROM 34b and the RAM 34c via the internal bus 36. The CPU 34a reads various programs and files stored in the ROM 34b or the storage unit 35 and loads the programs and files in the RAM 34c. The CPU 34a operates according to the various programs and files loaded in the RAM 34c to control the operation of the label printer 30a. That is, the control unit 34 in this example has a configuration of general computer. The host monitoring software 32a (see FIG. 1) is executed by the CPU 34a.

The storage unit 35 is a non-volatile memory such as a flash memory, a hard disk drive (HDD), or a solid state drive (SSD), which maintains stored information even if the power is turned off. The storage unit 35 stores a program or the like including a control program P1. The control program P1 is a program for implementing functions of the label printer 30a.

The control program P1 may be pre-installed in the ROM 34b. The control program P1 may be recorded and provided on a non-transitory computer readable recording medium such as a CD-ROM, a flexible disk (FD), a CD-R, a digital versatile disc (DVD) as a file in a format that is installable or executable in the control unit 34. The control program P1 may be stored in a computer connected to a network such as the Internet, and downloaded and provided via the network. The control program P1 may be provided or distributed via a network such as the Internet.

The storage unit 35 stores print data Q1 and operation history data H1. The print data Q1 is a file indicating a printing content generated based on an instruction from the host computer 20a. The operation history data H1 is a file that stores an operation state of the label printer 30a, an operation state of the host computer 20a as seen from the label printer 30a, and a content of information obtained via the communication line L in correlation with time when those events occur. The time is obtained from a timer (clock) included in the CPU 34a.

Referring back to FIG. 3, the controller 37 connects the control unit 34 to the console 39, the platen motor 3, the ribbon winding motor 11, the thermal head 7, and the mark sensor 6. The controller 37 controls each connected hardware based on the command from the control unit 34. These functions of the hardware are described above, and thus repetitive descriptions thereof are omitted. The console 39 includes a liquid crystal monitor 40 as a display unit and a keyboard 41 as an operation unit.

The communication controller 38 has an interface function between the label printer 30a and the host computer 20a. The label printer 30a receives the print data and the like from the host computer 20a via the communication line L and the communication controller 38. The label printer 30a transmits an operation state and the like of the label printer 30a to the host computer 20a via the communication line L and the communication controller 38.

### (Description of hardware configuration of host computer)

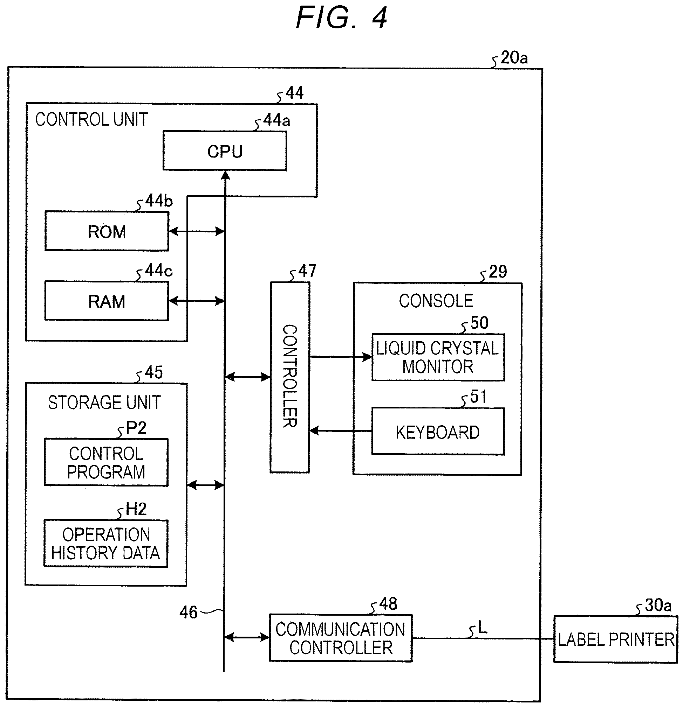

Next, with reference to FIG. 4, the hardware configuration of the host computer 20a is described. FIG. 4 is a block diagram illustrating an example of a hardware configuration of the host computer of the first embodiment.

The host computer 20a includes a control unit 44, a storage unit 45, a controller 47, and a communication controller 48.

The control unit 44 is connected to the storage unit 45, the controller 47, and the communication controller 48 via an internal bus 46. The control unit 44 includes a CPU 44a, a ROM 44b, and a RAM 44c.

The CPU 44a is connected to the ROM 44b and the RAM 44c via the internal bus 46. The CPU 44a reads various programs or files stored in the ROM 44b or the storage unit 45 and loads the programs or files in the RAM 44c. The CPU 44a operates according to the various programs and files loaded in the RAM 44c to control the operation of the host computer 20a. That is, the control unit 44 has a configuration of a general computer. The printer driver 22a (see FIG. 1) is executed by the CPU 44a.

The storage unit 45 is a non-volatile memory such as a flash memory, a hard disk drive (HDD), or a solid state drive (SSD), which maintains stored information even if the power is turned off. The storage unit 45 stores a program or the like such as a control program P2. The control program P2 is a program for implementing functions of the host computer 20a.

The storage unit 35 stores operation history data H2. The operation history data H2 is a file that stores an operation state of the host computer 20a, an operation state of the label printer 30a (as seen from the host computer 20a), and a content of the information obtained via the communication line L in correlation with a time for when those events occurred.

Referring back to FIG. 4, the controller 47 connects the control unit 44 to the console 29. The controller 47 controls the console 29 based on the command from the control unit 44. The function of the console 29 is as described above. The console 29 includes a liquid crystal monitor 50 as a display unit and a keyboard 51 as an operation unit.

The communication controller 48 has an interface function between the host computer 20a and the label printer 30a. The host computer 20a transmits the print data to the label printer 30a via the communication line L and the communication controller 48. The host computer 20a receives an operation state or the like of the label printer 30a from the label printer 30a via the communication line L and the communication controller 38.

### (Description of functional configuration of label printer system)

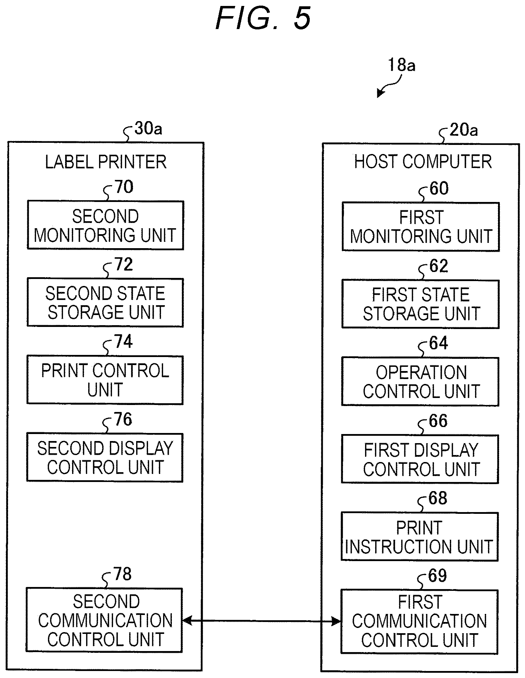

Next, with reference to FIG. 5, the functional configuration of the label printer system 18a is described. FIG. 5 is a functional block diagram illustrating an example of a functional configuration of a label printer system according to the first embodiment.

The control unit 44 of the host computer 20a (see FIG. 4) loads the control program P2 in the RAM 44c and executes the control program P2 and thus serves as a first monitoring unit 60, a first state storage unit 62, an operation control unit 64, a first display control unit 66, a print instruction unit 68, and a first communication control unit 69 as illustrated in FIG. 5.

The first monitoring unit 60 monitors states of the host computer 20a, the label printer 30a, and the communication line L in correlation with time.

The first state storage unit 62 stores the monitoring result of the first monitoring unit 60 in the storage unit 45 as the operation history data H2.

The operation control unit 64 recognizes a content of an operation instruction to the label printer 30a based on an operation instruction given to the host computer 20a, specifically, operation information for the keyboard 51.

The first display control unit 66 displays the monitoring result of the first monitoring unit 60 on the liquid crystal monitor 50.

The print instruction unit 68 instructs the label printer 30a to execute printing. Specifically, the print instruction unit 68 instructs the label printer 30a to transmit the print data, the print content, or the like.

The first communication control unit 69 controls the communication between the host computer 20a and the label printer 30a.

The control unit 34 of the label printer 30a (see FIG. 3) loads the control program P1 in the RAM 34c and executes the control program P1 and thus serves as a second monitoring unit 70, a second state storage unit 72, a print control unit 74, a second display control unit 76, and a second communication control unit 78 as illustrated in FIG. 5.

The second monitoring unit 70 monitors the states of the label printer 30a, the host computer 20a, and the communication line L in correlation with time.

The second state storage unit 72 stores the monitoring result of the second monitoring unit 70 in the storage unit 35 as the operation history data H1.

The print control unit 74 performs general control regarding printing of the print data received from the host computer 20a.

The second display control unit 76 displays the monitoring result of the second monitoring unit 70 on the liquid crystal monitor 40.

The second communication control unit 78 controls the communication between the label printer 30a and the host computer 20a.

### (Description of operation of first monitoring unit)

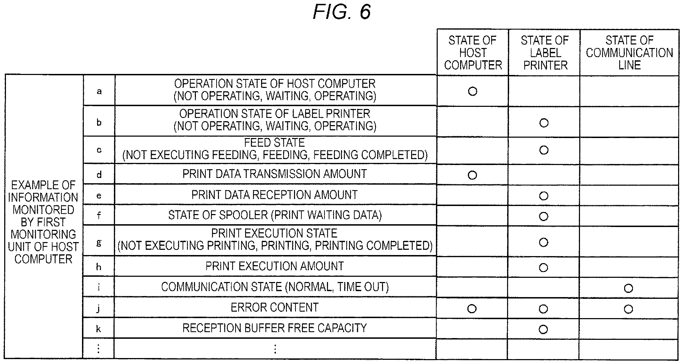

Next, with reference to FIG. 6, the operation of the first monitoring unit 60 is described. FIG. 6 is a diagram illustrating an example of parameters monitored by the first monitoring unit.

The first monitoring unit 60 monitors an operation state a of the host computer 20a, a print data transmission amount d, an error content j, and the like as the states of the host computer 20a, as illustrated in FIG. 6.

The first monitoring unit 60 monitors an operation state b of the label printer 30a, a feed state c, a print data reception amount e, a spooler state f, a print execution state g, a print execution amount h, the error content j, a reception buffer free capacity k, and the like as the states of the label printer 30a, as illustrated in FIG. 6.

The first monitoring unit 60 monitors a communication state i, the error content j, and the like as the states of the communication line L.

The parameters illustrated in FIG. 6 are monitored in correlation with time. That is, these parameters are tracked over time and parameter values are recorded in conjunction/association with the recordation time or the like. The parameters illustrated in FIG. 6 are an example and the first monitoring unit 60 may monitor parameters that is not illustrated in FIG. 6.

### (Description of operation of second monitoring unit)

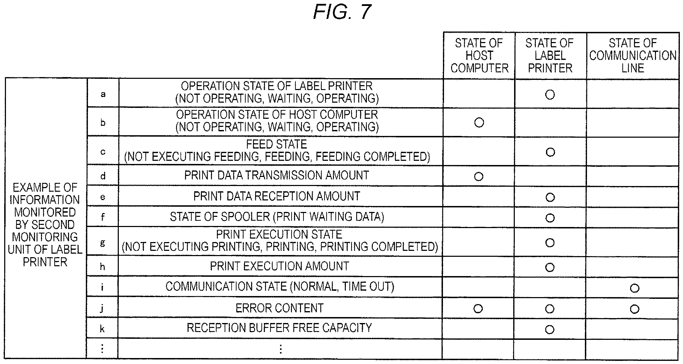

Next, with reference to FIG. 7, the operation of the second monitoring unit 70 is described. FIG. 7 is a diagram illustrating an example of parameters monitored by the second monitoring unit.

The second monitoring unit 70 monitors the operation state a of the host computer 20a, the print data transmission amount d, the error content j, and the like as the states of the host computer 20a as illustrated in FIG. 7.

The second monitoring unit 70 monitors the operation state b of the label printer 30a, the feed state c, the print data reception amount e, the spooler state f, the print execution state g, the print execution amount h, the error content j, the reception buffer free capacity k, and the like as the states of the label printer 30a as illustrated in FIG. 7.

Further, the second monitoring unit 70 monitors the communication state i, the error content j, and the like as the states of the communication line L.

The parameters illustrated in FIG. 7 are monitored in correlation with time. That is, these parameters are tracked over time and parameter values are recorded in conjunction/association with the recordation time or the like. The parameters illustrated in FIG. 7 are an example, and the second monitoring unit 70 may monitor parameters that is not illustrated in FIG. 7. For example, the type of waiting event, the elapsed time until it is determined that the communication timed out, or the like may be monitored.

As illustrated in FIGS. 6 and 7, the first monitoring unit 60 and the second monitoring unit 70 monitor the same kinds of parameters with each other. By comparing the monitoring result of the first monitoring unit 60 and the monitoring result of the second monitoring unit 70 with each other, it is possible to accurately investigate the cause if a problem occurs in the operation of the label printer 30a.

That is, if a problem occurs in the operation of the label printer 30a, and the monitoring result of the first monitoring unit 60 and the monitoring result of the second monitoring unit 70 are identical to each other, the cause of the problem can be immediately specified based on the monitoring result. If the monitoring result of the first monitoring unit 60 and the monitoring result of the second monitoring unit 70 are incompatible, it can be assumed that it is highly likely that there is an error in the communication line L connecting the host computer 20a and the label printer 30a.

### (Description of flow of process performed by label printer system)

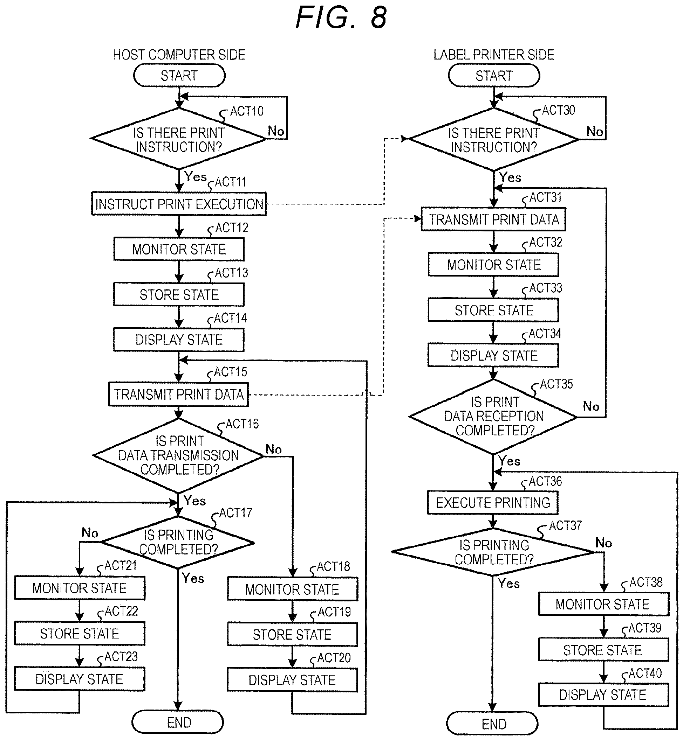

Next, with reference to FIG. 8, the flow of the process performed by the label printer system 18a is described by classifying the flow of the process into a flow of the process performed by the host computer 20a and a flow of the process performed by the label printer 30a. FIG. 8 is a flowchart illustrating an example of a flow of a process performed by the label printer system according to the first embodiment.

### (Description of flow of process performed by host computer)

First, the flow of the process performed by the host computer 20a is described. The operation control unit 64 determines whether there is a print instruction (ACT 10) . If there is a print instruction (ACT 10: Yes), the process proceeds to ACT 11. However, if there is not a print instruction (ACT 10: No), the process repeats ACT 10.

If Yes in ACT 10 is determined, the print instruction unit 68 instructs the label printer 30a to execute printing (ACT 11). The first communication control unit 69 transmits the print execution instruction to the label printer 30a via the communication line L.

The first monitoring unit 60 monitors the states of the host computer 20a, the label printer 30a, and the communication line L in correlation with the time (ACT 12) .

The first state storage unit 62 stores the monitoring result of the first monitoring unit 60 as the operation history data H2 (ACT 13).

The first display control unit 66 displays the monitoring result of the first monitoring unit 60 on the liquid crystal monitor 50 (ACT 14).

The print instruction unit 68 causes the first communication control unit 69 to transmit the print data to the label printer 30a (ACT 15).

The print instruction unit 68 determines whether the transmission of the print data has been completed (ACT 16) . If the transmission of the print data is completed (ACT 16: Yes), the process proceeds to ACT 17. However, if the transmission of the print data is not yet completed (ACT 16: No), the process proceeds to ACT 18.

If Yes in ACT 16 is determined, the first monitoring unit 60 then determines whether the printing has been completed (ACT 17). If printing is completed (ACT 17: Yes), the host computer 20a ends the process of FIG. 8. However, if the printing is not yet completed (ACT 17: No), the process proceeds to ACT 21.

However, if No in ACT 16 is determined, the first monitoring unit 60 monitors the states of the host computer 20a, the label printer 30a, and the communication line L in correlation with the time (ACT 18).

The first state storage unit 62 stores the monitoring result of the first monitoring unit 60 as the operation history data H2 (ACT 19).

The first display control unit 66 displays the monitoring result of the first monitoring unit 60 on the liquid crystal monitor 50 (ACT 20). Thereafter, the process returns to ACT 15.

Referring back to ACT 17, if No in ACT 17 is determined, the first monitoring unit 60 monitors the states of the host computer 20a, the label printer 30a, and the communication line L in correlation with the time (ACT 21).

The first state storage unit 62 stores the monitoring result of the first monitoring unit 60 as the operation history data H2 (ACT 22).

The first display control unit 66 causes the liquid crystal monitor 50 to display the monitoring result of the first monitoring unit 60 (ACT 23). Thereafter, the process returns to ACT 17.

### (Description of flow of process performed by label printer)

Next, the flow of the process performed by the label printer 30a is described. The print control unit 74 determines whether there is a print instruction (ACT 30). If there is a print instruction (ACT 30: Yes), the process proceeds to ACT 31. However, if there is not a print instruction (ACT 30: No), the process repeats ACT 30.

If Yes in ACT 30 is determined, the print control unit 74 receives the print data from the host computer 20a (ACT 31).

The second monitoring unit 70 monitors the states of the host computer 20a, the label printer 30a, and the communication line L in correlation with the time (ACT 32) .

The second state storage unit 72 stores the monitoring result of the second monitoring unit 70 as the operation history data H1 (ACT 33).

The second display control unit 76 causes the liquid crystal monitor 40 to display the monitoring result of the second monitoring unit 70 (ACT 34).

The print control unit 74 determines whether the reception of the print data has been completed (ACT 35). If the reception of the print data is completed (ACT 35: Yes), the process proceeds to ACT 36. However, if the reception of the print data is not yet completed (ACT 35: No), the process returns to ACT 31.

If Yes in ACT 35 is determined, the print control unit 74 executes printing of the print data (ACT 36).

The print control unit 74 determines whether the printing has been completed (ACT 37). If printing is completed (ACT 37: Yes), the label printer 30a ends the process of FIG. 8. However, if printing is not yet completed (ACT 37: No), the process proceeds to ACT 38.

If No in ACT 37 is determined, the second monitoring unit 70 monitors the states of the host computer 20a, the label printer 30a, and the communication line L in correlation with the time (ACT 38).

The second state storage unit 72 stores the monitoring result of the second monitoring unit 70 as the operation history data H1 (ACT 39).

The second display control unit 76 causes the liquid crystal monitor 40 to display the monitoring result of the second monitoring unit 70 (ACT 40). Thereafter, the process returns to ACT 36.

As described above, in the label printer system 18a of the first embodiment, the first monitoring unit 60 included in the host computer 20a monitors the states of the host computer 20a, the label printer 30a, and the communication line L in correlation with the time. Then, the first display control unit 66 causes the liquid crystal monitor 50 to display the monitoring result of the first monitoring unit 60. Also, the second monitoring unit 70 included in the label printer 30a monitors the states of the host computer 20a, the label printer 30a, and the communication line L in correlation with the time. Then, the second display control unit 76 causes the liquid crystal monitor 40 to display the monitoring result of the second monitoring unit 70. Accordingly, the host computer 20a and the label printer 30a monitor the state of its own device and the state of the other, and thus, it is possible to promptly and accurately investigate the cause if a problem occurs in the label printer system 18a.

In the label printer system 18a (printer system) of the first embodiment, when the host computer 20a instructs the label printer 30a to execute printing, the second monitoring unit 70 of the label printer 30a (printer) monitors at least, a print data amount received by the label printer 30a from the host computer 20a and a print data amount transmitted by the host computer 20a to the label printer 30a. Accordingly, the print data amount transmitted to the label printer 30a and the print data amount received by the label printer 30a can be compared with each other. Therefore, the progress of printing can be reliably monitored.

Since the host computer 20a stores the operation history data H2 in the first state storage unit 62 and the label printer 30a stores the operation history data H1 in the second state storage unit 72, even if an operator of the label printer system 18a misses the monitoring result displayed on the liquid crystal monitors 40 and 50, the operator can read and monitor the past monitoring result.

For example, if the label printer 30a cannot receive the print data in the middle, the second monitoring unit 70 may instruct the host computer 20a to discard the transmitted print data and instruct the printer driver 22a to transmit the print data again.

The label printer system 18a described in the first embodiment is a system in which one host computer 20a and one label printer 30a are connected to each other, but the label printer system may be a system in which a plurality of host computers and one label printer are connected to each other, or may be a system in which one host computer and a plurality of label printers are connected to each other. Alternatively, the label printer system may be a system in which a plurality of host computers and a plurality of label printers are connected to each other. In this case, the host computer transmits the print data together with identification information for specifying a host computer to a label printer to print the print data. The first monitoring unit 60 of the host computer monitors the state of its own device (host computer), the state of the label printer to which the print data is transmitted, and the state of the communication line. The second monitoring unit 70 of the label printer monitors the state of its own device (label printer), the state of the connected host computer, and the state of the communication line.

### (Second embodiment)

Hereinafter, a label printer system 18b which is a second embodiment is described.

### (Description of overall configuration of label printer system)

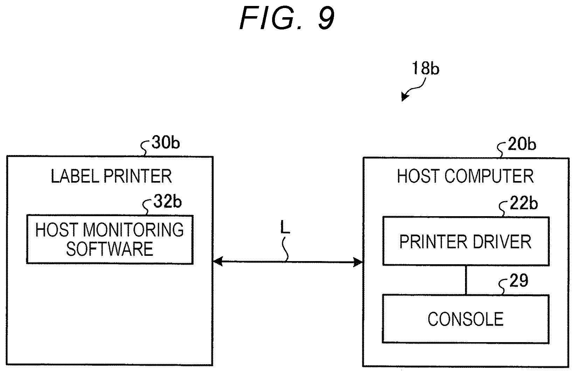

With reference to FIG. 9, the overall configuration of the label printer system 18b is described. FIG. 9 is a block diagram illustrating a schematic configuration of the label printer system according to the second embodiment. The label printer system 18b includes a host computer 20b and a label printer 30b. The host computer 20b is, for example, a PC, a mobile terminal, an information terminal, a handy terminal, a POS terminal, or the like. The host computer 20b and the label printer 30b are connected to each other via the communication line L such as wireless LAN or short-range wireless communication and can perform information communication therebetween. The label printer system 18b is an example of a printer system.

The host computer 20b includes a printer driver 22b and the console 29. The printer driver 22b has a function of receiving a result monitored by host monitoring software 32b of the label printer 30b in addition to the function of the printer driver 22a included in the host computer 20a described in the first embodiment.

The console 29 includes the liquid crystal monitor 50 as a display unit and the keyboard 51 as an operation unit. The liquid crystal monitor 50 included in the console 29 displays a monitoring result by the printer driver 22b and a monitoring result by the host monitoring software 32b.

The label printer 30b includes the host monitoring software 32b. The host monitoring software 32b has a function of transmitting the monitoring result of the host monitoring software 32a to the host computer 20b in addition to the function of the host monitoring software 32a included in the label printer 30a described in the first embodiment.

The hardware configuration of the label printer system 18b is the same as the hardware configuration of the label printer system 18a except that the label printer 30b does not include a console.

### (Description of functional configuration of label printer system)

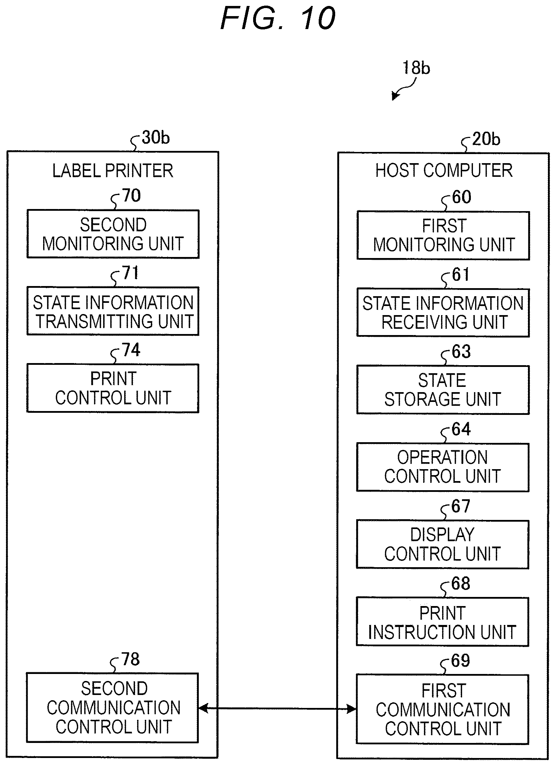

Next, with reference to FIG. 10, the functional configuration of the label printer system 18b is described. FIG. 10 is a functional block diagram illustrating an example of a functional configuration of a label printer system according to the second embodiment.

The host computer 20b includes the first monitoring unit 60, a state information receiving unit 61, a state storage unit 63, the operation control unit 64, a display control unit 67, the print instruction unit 68, and the first communication control unit 69. Among these, the first monitoring unit 60, the operation control unit 64, the print instruction unit 68, and the first communication control unit 69 have the same functions as units having the same names and included in the host computer 20a of the first embodiment.

The state information receiving unit 61 receives the states of the label printer 30b, the host computer 20b, and the communication line L monitored by the second monitoring unit 70 of the label printer 30b from the label printer 30b via the communication line L. Here, the state information receiving unit 61 is an example of a first receiving unit in the present disclosure.

The state storage unit 63 stores the monitoring result of the first monitoring unit 60 and the monitoring result of the second monitoring unit 70 as the operation history data H2.

The display control unit 67 causes the liquid crystal monitor 50 to display the monitoring result of the first monitoring unit 60 and the monitoring result of the second monitoring unit 70.

The label printer 30b includes the second monitoring unit 70, a state information transmitting unit 71, the print control unit 74, and the second communication control unit 78. Among these, the second monitoring unit 70, the print control unit 74, and the second communication control unit 78 have the same functions as units having the same names and included in the label printer 30a of the first embodiment.

The state information transmitting unit 71 transmits the states of the label printer 30b, the host computer 20b, and the communication line L monitored by the second monitoring unit 70 of the label printer 30b to the host computer 20b via the communication line L. The state information transmitting unit 71 is an example of a first transmitting unit in the present disclosure.

### (Description of flow of process performed by label printer system)

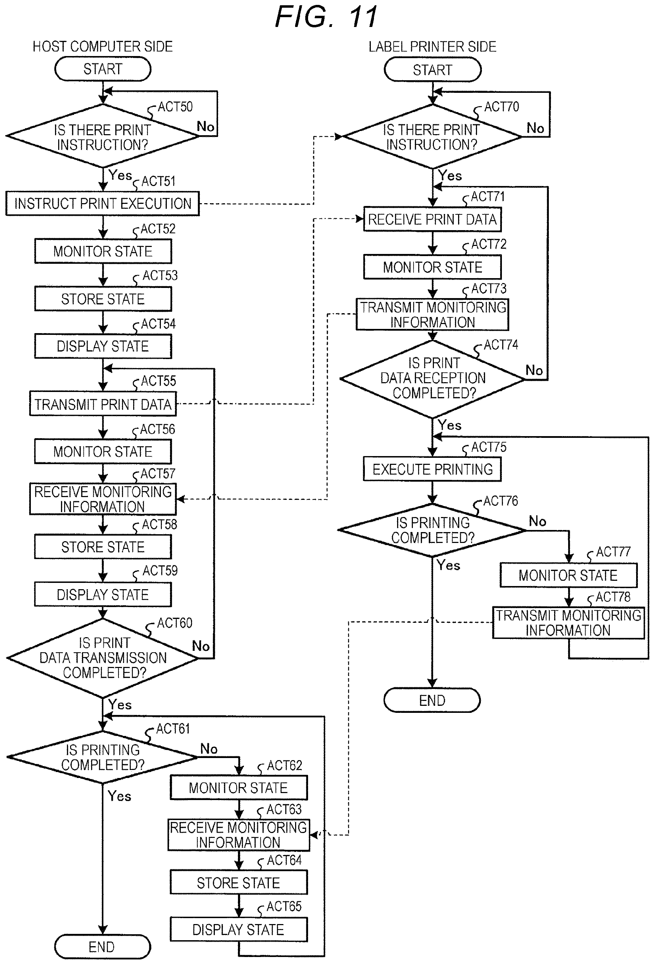

Next, with reference to FIG. 11, the flow of the process performed by the label printer system 18b is described by classifying the flow of the process into a flow of a process performed by the host computer 20b and a flow of a process performed by the label printer 30b. FIG. 11 is a flowchart illustrating an example of the flow of the process performed by the label printer system according to the second embodiment.

### (Description of flow of process performed by host computer)

First, the flow of the process performed by the host computer 20b is described. The operation control unit 64 determines whether there is a print instruction (ACT 50). If there is a print instruction (ACT 50: Yes), the process proceeds to ACT 51. However, if there is not a print instruction (ACT 50: No), the process repeats ACT 50.

If Yes in ACT 50 is determined, the print instruction unit 68 instructs the label printer 30b to execute printing (ACT 51). The first communication control unit 69 transmits the print execution instruction to the label printer 30b via the communication line L.

The first monitoring unit 60 monitors the states of the host computer 20b, the label printer 30b, and the communication line L over time (ACT 52).

The state storage unit 63 stores the monitoring result of the first monitoring unit 60 as the operation history data H2 (ACT 53).

The display control unit 67 causes the liquid crystal monitor 50 to display the monitoring result of the first monitoring unit 60 (ACT 54).

The print instruction unit 68 causes the first communication control unit 69 to transmit the print data to the label printer 30b (ACT 55).

The first monitoring unit 60 monitors (tracks) the states of the host computer 20b, the label printer 30b, and the communication line L in correlation with the time (ACT 56).

The state information receiving unit 61 receives monitoring information from the second monitoring unit 70 about the label printer 30b (ACT 57).

The state storage unit 63 stores the monitoring result information from the first monitoring unit 60 and the monitoring result information from the second monitoring unit 70 as the operation history data H2 (ACT 58).

The display control unit 67 causes the liquid crystal monitor 50 to display the monitoring result information from the first monitoring unit 60 and the monitoring result information from the second monitoring unit 70 (ACT 59) .

The print instruction unit 68 determines whether the transmission of the print data has been completed (ACT 60) . If the transmission of the print data is completed (ACT 60: Yes), the process proceeds to ACT 61. However, if the transmission of the print data is not yet completed (ACT 60: No), the process returns to ACT 55.

If Yes in ACT 60 is determined, the first monitoring unit 60 then determines whether the printing has been completed (ACT 61) . If the printing is completed (ACT 61: Yes), the host computer 20b ends the process of FIG. 11. However, if the printing is not yet completed (ACT 61: No), the process proceeds to ACT 62.

If No in ACT 61 is determined, the first monitoring unit 60 monitors the states of the host computer 20a, the label printer 30a, and the communication line L in correlation with the time (ACT 62).

The state information receiving unit 61 receives the monitoring information about the label printer 30b from the second monitoring unit 70 (ACT 63).

The state storage unit 63 stores the monitoring result from the first monitoring unit 60 and the monitoring result from the second monitoring unit 70 as the operation history data H2 (ACT 64).

The display control unit 67 causes the liquid crystal monitor 50 to display the monitoring result information from the first monitoring unit 60 and the monitoring result information from the second monitoring unit 70 (ACT 65) . Thereafter, the process returns to ACT 61.

### (Description of flow of process performed by label printer)

Next, the flow of the process performed by the label printer 30b is described. The print control unit 74 determines whether there is a print instruction (ACT 70) . If there is a print instruction (ACT 70: Yes), the process proceeds to ACT 71. However, if there is not a print instruction (ACT 70: No), the process repeats ACT 70.

If Yes in ACT 70 is determined, the print control unit 74 receives the print data from the host computer 20b (ACT 71).

The second monitoring unit 70 monitors the states of the host computer 20b, the label printer 30b, and the communication line L in correlation with the time (ACT 72) .

The state information transmitting unit 71 transmits the states of the label printer 30b, the host computer 20b, and the communication line L monitored by the second monitoring unit 70 to the host computer 20b via the communication line L (ACT 73).

The print control unit 74 determines whether the reception of the print data has been completed (ACT 74). If the reception of the print data is completed (ACT 74: Yes), the process proceeds to ACT 75. However, if the reception of the print data is not yet completed (ACT 74: No), the process returns to ACT 71.

If Yes in ACT 74 is determined, the print control unit 74 executes printing of the print data (ACT 75).

The print control unit 74 determines whether the printing has been completed (ACT 76) . If the printing is completed (ACT 76: Yes), the label printer 30b ends the process of FIG. 11. However, if the printing is not yet completed (ACT 76: No), the process proceeds to ACT 77.

If No in ACT 76 is determined, the second monitoring unit 70 monitors the states of the host computer 20b, the label printer 30b, and the communication line L in correlation with the time (ACT 77).

The state information transmitting unit 71 transmits the states of the label printer 30b, the host computer 20b, and the communication line L monitored by the second monitoring unit 70 to the host computer 20b via the communication line L (ACT 78). Thereafter, the process returns to ACT 75.

As described above, in a label printer system 18b of the second embodiment, the second monitoring unit 70 included in the label printer 30b monitors the states of the host computer 20b, the label printer 30b, and the communication line L in correlation with the time, and the state information transmitting unit 71 transmits the monitoring result of the second monitoring unit 70 to the host computer 20b. The states of the host computer 20b, the label printer 30b, and the communication line L, as monitored by the first monitoring unit 60 included in the host computer 20b over time are displayed on the liquid crystal monitor 50 by the display control unit 67 together with the monitoring results from the second monitoring unit 70 received by the state information receiving unit 61.

Accordingly, since the host computer 20b and the label printer 30b each monitor their own device and the state of the other device, it is possible to promptly and accurately investigate the cause (s) when a problem occurs in the label printer system 18b. Particularly, since the states of the host computer 20b and the label printer 30b can be simultaneously monitored by the console 29 (the liquid crystal monitor 50) of the host computer 20b, even if the host computer 20b and the label printer 30b are physically separated from each other, the printing state can still be easily monitored.

In the host computer 20b of the second embodiment, the first monitoring unit 60 monitors the states of the host computer 20b, the label printer 30b, and the communication line L in correlation with the time, the state information receiving unit 61 receives the states of the label printer 30b, the host computer 20b, and the communication line L, monitored by the label printer 30b in correlation with the time, and the display control unit 67 causes the liquid crystal monitor 50 to display the monitoring result from the first monitoring unit 60 and the reception result of the state information receiving unit 61. Accordingly, in the console 29 of the host computer 20b, the monitoring result by the host computer 20b and the monitoring result by the label printer 30b can be simultaneously monitored by the liquid crystal monitor 50. Accordingly, even if the host computer 20b and the label printer 30b are physically separated from each other, the printing state still can be easily monitored.

### (Third embodiment)

Hereinafter, a label printer system 18c of a third embodiment is described.

### (Description of overall configuration of label printer system)

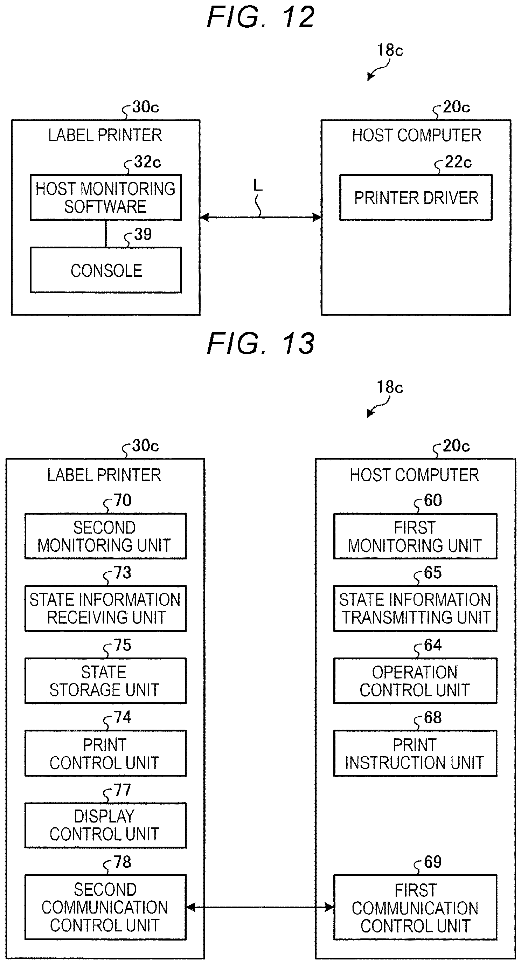

With reference to FIG. 12, the overall configuration of the label printer system 18c is described. FIG. 12 is a block diagram illustrating a schematic configuration of the label printer system according to the third embodiment. The label printer system 18c includes a host computer 20c and a label printer 30c. The host computer 20c is, for example, a PC, a mobile terminal, an information terminal, a handy terminal, a POS terminal, or the like. The host computer 20c and the label printer 30c are connected to each other via the communication line L such as wireless LAN or short-range wireless communication and can perform information communication therebetween. The label printer system 18c is an example of a printer system.

The host computer 20c includes a printer driver 22c. The printer driver 22c has a function of transmitting the monitoring result of the printer driver 22c to the label printer 30c in addition to the function of the printer driver 22a included in the host computer 20a described in the first embodiment.

The label printer 30c includes host monitoring software 32c and the console 39. The host monitoring software 32c includes a function of receiving the result monitored by the printer driver 22c of the host computer 20c in addition to the function of the host monitoring software 32a included in the label printer 30a described in the first embodiment.

The console 39 includes the liquid crystal monitor 40 as a display unit and the keyboard 41 as an operation unit. The liquid crystal monitor 40 included in the console 29 displays the monitoring result by the host monitoring software 32c and the monitoring result by the printer driver 22c.

The hardware configuration of the label printer system 18c is the same as the hardware configuration of the label printer system 18a, except that the host computer 20c does not include a console.

### (Description of functional configuration of label printer system)

Next, with reference to FIG. 13, the functional configuration of the label printer system 18c is described. FIG. 13 is a functional block diagram illustrating an example of a functional configuration of the label printer system according to the third embodiment.

The label printer 30c includes the second monitoring unit 70, a state information receiving unit 73, a state storage unit 75, the print control unit 74, a display control unit 77, and the second communication control unit 78. Among these, the second monitoring unit 70, the print control unit 74, and the second communication control unit 78 have the same functions as units having the same names and included in the label printer 30a of the first embodiment.

The state information receiving unit 73 receives the states of the label printer 30c, the host computer 20c, and the communication line L monitored by the first monitoring unit 60 of the host computer 20c via the communication line L. The state information receiving unit 73 is an example of a second receiving unit.

The state storage unit 75 stores the monitoring result of the first monitoring unit 60 and the monitoring result of the second monitoring unit 70 as the operation history data H1.

The display control unit 77 causes the liquid crystal monitor 40 to display the monitoring result of the first monitoring unit 60 and the monitoring result of the second monitoring unit 70.

The host computer 20c includes the first monitoring unit 60, a state information transmitting unit 65, the operation control unit 64, the print instruction unit 68, and the first communication control unit 69. Among these, the first monitoring unit 60, the operation control unit 64, the print instruction unit 68, and the first communication control unit 69 have the same functions as units having the same names and included in the host computer 20a of the first embodiment.

The state information transmitting unit 65 transmits the monitoring result of the first monitoring unit 60 to the label printer 30c. The state information transmitting unit 65 is an example of a second transmitting unit.

### (Description of flow of process performed by label printer system)

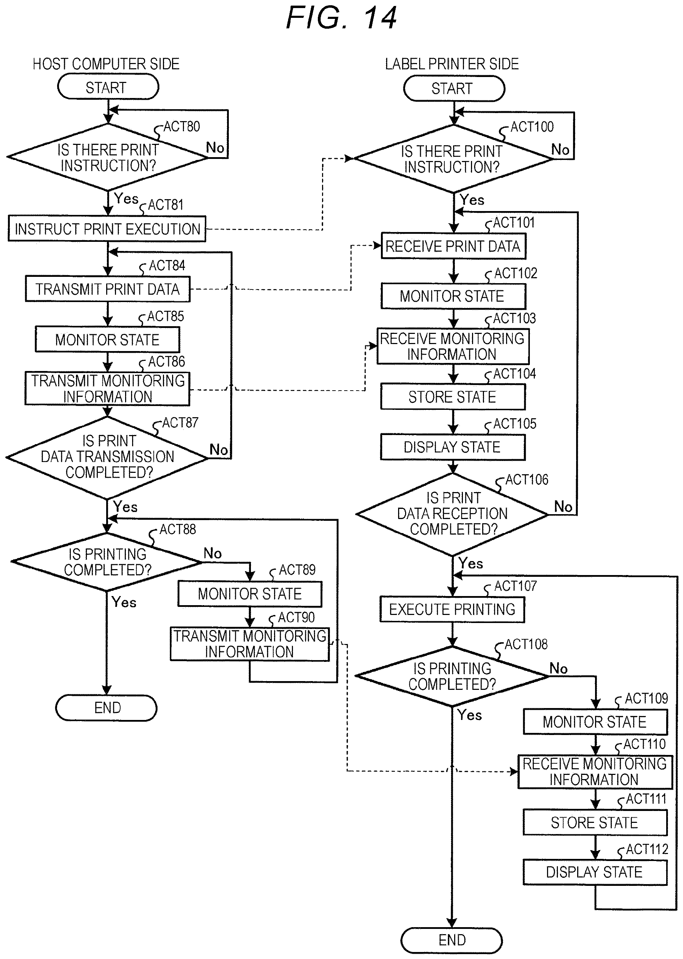

Next, with reference to FIG. 14, the flow of the process performed by the label printer system 18c is described by classifying the flow of the process into a flow of a process performed by the host computer 20c and a flow of a process performed by the label printer 30c. FIG. 14 is a flowchart illustrating an example of a flow of a process performed by the label printer system according to the third embodiment.

### (Description of flow of process performed by host computer)

First, the flow of the process performed by the host computer 20c is described. The operation control unit 64 determines whether there is a print instruction (ACT 80) . If there is a print instruction (ACT 80: Yes), the process proceeds to ACT 81. However, if there is not a print instruction (ACT 80: No), the process repeats ACT 80.

If Yes in ACT 80 is determined, the print instruction unit 68 instructs the label printer 30c to execute printing (ACT 81). The first communication control unit 69 transmits the print execution instruction to the label printer 30c via the communication line L.

The print instruction unit 68 causes the first communication control unit 69 to transmit the print data to the label printer 30c (ACT 84).

The first monitoring unit 60 monitors the states of the host computer 20c, the label printer 30c, and the communication line L in correlation with the time (ACT 85) .

The state information transmitting unit 65 transmits the states of the label printer 30c, the host computer 20c, and the communication line L monitored by the first monitoring unit 60 to the label printer 30c via the communication line L (ACT 86).

The print instruction unit 68 determines whether the transmission of the print data has been completed (ACT 87) . If the print data is completed (ACT 87: Yes), the process proceeds to ACT 88. However, if the transmission of the print data is not yet completed (ACT 87: No), the process returns to ACT 84.

If Yes in ACT 87 is determined, the first monitoring unit 60 then determines whether the printing has been completed (ACT 88) . If the printing is completed (ACT 88: Yes), the host computer 20c ends the process of FIG. 14. However, if the printing is not yet completed (ACT 88: No), the process proceeds to ACT 89.

If No in ACT 88 is determined, the first monitoring unit 60 monitors the states of the host computer 20c, the label printer 30c, and the communication line L in correlation with the time (ACT 89).

The state information transmitting unit 65 transmits the states of the label printer 30c, the host computer 20c, and the communication line L monitored by the first monitoring unit 60 to the label printer 30c via the communication line L (ACT 90). Thereafter, the process returns to ACT 88.

### (Description of flow of process performed by label printer)

Next, the flow of the process performed by the label printer 30c is described. The print control unit 74 determines whether there is a print instruction (ACT 100) . If there is a print instruction (ACT 100: Yes), the process proceeds to ACT 101. However, if there is not a print instruction (ACT 100: No), the process repeats ACT 100.

If Yes in ACT 100 is determined, the print control unit 74 receives the print data from the host computer 20c (ACT 101).

The second monitoring unit 70 monitors the states of the host computer 20c, the label printer 30c, and the communication line L in correlation with time (ACT 102).

The state information receiving unit 73 receives the monitoring information which is the monitoring result of the first monitoring unit 60 from the host computer 20c (ACT 103).

The state storage unit 75 stores the monitoring result of the first monitoring unit 60 and the monitoring result of the second monitoring unit 70 as the operation history data H1 (ACT 104).

The display control unit 77 causes the liquid crystal monitor 40 to display the monitoring result of the first monitoring unit 60 and the monitoring result of the second monitoring unit 70 (ACT 105).

The print control unit 74 determines whether the reception of the print data is completed (ACT 106). If the reception of the print data is completed (ACT 106: Yes), the process proceeds to ACT 107. However, if the reception of the print data is not yet completed (ACT 106: No), the process returns to ACT 101.

If Yes in ACT 106 is determined, the print control unit 74 executes printing of the print data (ACT 107).

The print control unit 74 determines whether the printing is completed (ACT 108). If the printing is completed (ACT 108: Yes), the label printer 30c ends the process of FIG. 14. However, if the printing is not yet completed (ACT 106: No), the process proceeds to ACT 109.

If No in ACT 106 is determined, the second monitoring unit 70 monitors the states of the host computer 20c, the label printer 30c, and the communication line L in correlation with time (ACT 109).

The state information receiving unit 73 receives the monitoring information which is the monitoring result of the first monitoring unit 60 from the host computer 20c (ACT 110).

The state storage unit 75 stores the monitoring result of the first monitoring unit 60 and the monitoring result of the second monitoring unit 70 as the operation history data H1 (ACT 111).

The display control unit 77 causes the liquid crystal monitor 40 to display the monitoring result of the first monitoring unit 60 and the monitoring result of the second monitoring unit 70 (ACT 112). Thereafter, the process returns to ACT 107.

As described above, in a label printer system 18c of the third embodiment, the first monitoring unit 60 included in the host computer 20c monitors the states of the host computer 20c, the label printer 30c, and the communication line L in correlation with time, and the state information transmitting unit 65transmits the monitoring result of the first monitoring unit 60 to the label printer 30c. Then, the states of the host computer 20c, the label printer 30c, and the communication line L, monitored by the second monitoring unit 70 included in the label printer 30c in correlation with time are displayed on the liquid crystal monitor 40 by the display control unit 77 together with the monitoring result of the first monitoring unit 60 received by the state information receiving unit 73. Accordingly, the host computer 20c and the label printer 30c monitor the states of their own devices and the states of the others, it is possible to promptly and accurately investigate the cause if a problem occurs in the label printer system 18c. Particularly, since the states of the host computer 20c and the label printer 30c can be simultaneously monitored at the console 39 (via the liquid crystal monitor 40) of the label printer 30c, even if the host computer 20c and the label printer 30c are physically separated from each other, the printing state can be easily monitored.

In the label printer 30c of the second embodiment, the second monitoring unit 70 monitors the states of the host computer 20c, the label printer 30c, and the communication line L in correlation with time, the state information receiving unit 73 receives the states of the host computer 20c, the label printer 30c, and the communication line L, monitored by the host computer 20c in correlation with time, and the display control unit 77 causes the liquid crystal monitor 40 to display the reception result of the second monitoring unit 70 and the monitoring result and the state information receiving unit 73. Accordingly, the monitoring results from the label printer 30c and the host computer 20c can be simultaneously monitored via the liquid crystal monitor 40 of the console 39 of the label printer 30c. Accordingly, even if the host computer 20c and the label printer 30c are separated from each other by some distance, the printing state can still be easily monitored.

## Claims

1. A printer system (18a), comprising:
a host computer (20a) configured to generate and transmit print data; and
a printer (30a) connected to the host computer via a communication line (L) and configured to receive the print data and perform printing based on the print data, wherein
the host computer (20a) includes:
a first communication interface (69) connected to the printer (30a);
a first display (29); and
a first control unit (44) for controlling the printer configured to perform a first monitoring operation to determine operation states of the host computer (20a) and the printer (30a) and a communication state of the communication line in association with a monitored time, to store a result of the first monitoring operation associated with the monitored time and to control the first display (29) to display the stored result of the first monitoring operation, and
the printer (30a) includes:
a second communication interface connected to the host computer;
a second display (39); and
a second control unit (34) for monitoring the host computer configured to perform a second monitoring operation to determine operation states of the host computer (20a) and the printer (30a) and a communication state of the communication line in association with a monitored time, to store a result of the second monitoring operation associated with the monitored time, and to control the second display (39) to display the stored result of the second monitoring operation.

2. The printer system (18a) according to claim 1, wherein the operation state of the host computer (20a) determined through the first monitoring operation includes a same operation state parameter as the operation state of the host computer (20a) determined through the second monitoring operation.

3. The printer system (18a) according to claim 1 or 2, wherein the operation state of the printer computer determined through the first monitoring operation includes a same operation state parameter as the operation state of the printer (30a) determined through the second monitoring operation.

4. The printer system (18a) according to any of claims 1 to 3, wherein the communication state of the communication line determined through the first monitoring operation includes a same communication state parameter as the communication state of the communication line determined through the second monitoring operation.

5. The printer system (18a) according to any of claims 1 to 4, wherein the operation state of the host computer (20a) determined through the second monitoring operation includes an amount of print data recognized by the second control unit (34) as being transmitted from the host computer (20a) and an amount of print data recognized by the host monitoring software (32a) as being received by the printer (30a) .

6. The printer system (18a) according to any of claims 1 to 5, wherein
the first control unit (44) of the host computer (20a) starts the first monitoring operation upon transmission of a print instruction to the printer (30a), and
the second control unit (34) of the printer (30a) starts the second monitoring operation upon reception of the print instruction from the host computer (20a).

7. A printer system (18b), comprising:
a host computer (20b) configured to generate and transmit print data; and
a printer (30b) connected to the host computer via a communication line (L) and configured to receive the print data and perform printing based on the print data, wherein
the host computer (20b) includes:
a first communication interface (69) connected to the printer (30b);
a display (29); and
a first control unit (44) for controlling the printer (30b) configured to perform a first monitoring operation to determine operation states of the host computer (20b) and the printer (30b) and a communication state of the communication line (L) in association with a monitored time, and to store a result of the first monitoring operation associated with the monitored time,
the printer (30b) includes:
a second communication interface connected to the host computer (20b); and
a second control unit (34) for monitoring the host computer, configured to perform a second monitoring operation to determine operation states of the host computer (20b) and the printer (30b) and a communication state of the communication line in association with a monitored time, to store a result of the second monitoring operation associated with the monitored time, and to control the second communication interface to transmit a result of the second monitoring operation to the host computer (20b) via the communication line (L), and
the first control unit (44) is configured to control the display (29) to display the stored result of the first monitoring operation and the stored result of second monitoring operation received from the printer (30b) .

8. The printer system (18b) according to claim 7, wherein the operation state of the host computer (20b) determined through the first monitoring operation includes a same operation state parameter as the operation state of the host computer (20b) determined through the second monitoring operation.

9. The printer system (18b) according to claim 7 or 8, wherein the operation state of the printer computer determined through the first monitoring operation includes a same operation state parameter as the operation state of the printer (30b) determined through the second monitoring operation.

10. The printer system (18b) according to any of claims 7 to 9, wherein the communication state of the communication line determined through the first monitoring operation includes a same communication state parameter as the communication state of the communication line determined through the second monitoring operation.

11. The printer system (18b) according to any of claims 7 to 10, wherein the operation state of the host computer (20b) determined through the second monitoring operation includes an amount of print data recognized by second control unit (34) as being transmitted from the host computer (20b) and an amount of print data recognized by the second control unit (34) as being received by the printer (30b) .

12. The printer system (18b) according to any of claims 7 to 11, wherein
the first control unit (44) of the host computer (20b) starts the first monitoring operation upon transmission of a print instruction to the printer (30b), and
the second control unit (34) of the printer (30b) starts the second monitoring operation upon reception of the print instruction from the host computer (20b).

13. The printer system (18b) according to any of claims 7 to 12, wherein the display displays the result of the first monitoring operation and the result of second monitoring operation received on a same screen.

14. A printer system (18c), comprising:
a host computer (20c) configured to generate and transmit print data; and
a printer (30c) connected to the host computer (20c) via a communication line (L) and configured to receive the print data and perform printing based on the print data, wherein
the host computer (20c) includes:
a first communication interface connected to the printer (30c); and
a first control unit (44) J for controlling the printer, configured to perform a first monitoring operation to determine operation states of the host computer (20c) and the printer (30c) and a communication state of the communication line in association with a monitored time, to store a result of the first monitoring operation associated with the monitored time, and to control the first communication interface to transmit the stored result of the first monitoring operation to the printer (30c) via the communication line (L),
the printer (30c) includes:
a second communication interface connected to the host computer (20c);
a display (39); and
a second control unit (34) for monitoring the host computer (20c), configured to perform a second monitoring operation to determine operation states of the host computer (20c) and the printer (30c) and a communication state of the communication line (L) in association with a monitored time, to store a result of the second monitoring operation associated with the monitored time, and control the display (39) to display the stored result of the first monitoring operation received from the host computer (20c) and the stored result of second monitoring operation.

15. The printer system (18c) according to claim 14, wherein the display (39) displays the result of the first monitoring operation and the result of second monitoring operation received on a same screen.

## Patentansprüche

1. Druckersystem (18a), umfassend:
einen Hostcomputer (20a), der konfiguriert ist, um Druckdaten zu erzeugen und zu übertragen; und
einen Drucker (30a), der mit dem Hostcomputer über eine Kommunikationsleitung (L) verbunden und konfiguriert ist, um die Druckdaten zu empfangen und basierend auf den Druckdaten zu drucken, wobei
der Hostcomputer (20a) einschließt:
eine erste Kommunikationsschnittstelle (69), die mit dem Drucker (30a) verbunden ist;
eine erste Anzeige (29); und
eine erste Steuereinheit (44) zum Steuern des Druckers,
die konfiguriert ist, um einen ersten Überwachungsvorgang zum Bestimmen von Betriebszuständen des Hostcomputers (20a) und des Druckers (30a) und eines Kommunikationszustandes der Kommunikationsleitung im Zusammenhang mit einer überwachten Zeit durchzuführen, um ein Ergebnis des ersten Überwachungsvorganges im Zusammenhang mit der überwachten Zeit zu speichern und um die erste Anzeige (29) so zu steuern, dass sie das gespeicherte Ergebnis des ersten Überwachungsvorganges anzeigt, und
der Drucker (30a) einschließt:
eine zweite Kommunikationsschnittstelle, die mit dem Hostcomputer verbunden ist;
eine zweite Anzeige (39); und
eine zweite Steuereinheit (34)
zum Überwachen des Hostcomputers, die konfiguriert ist, um einen zweiten Überwachungsvorgang zum Bestimmen von Betriebszuständen des Hostcomputers (20a) und des Druckers (30a) und eines Kommunikationszustandes der Kommunikationsleitung im Zusammenhang mit einer überwachten Zeit durchzuführen, um ein Ergebnis des zweiten Überwachungsvorganges im Zusammenhang mit der überwachten Zeit zu speichern und um die zweite Anzeige (39) so zu steuern, dass sie das gespeicherte Ergebnis des zweiten Überwachungsvorganges anzeigt.

2. Druckersystem (18a) nach Anspruch 1, wobei der Betriebszustand des Hostcomputers (20a), der durch den ersten Überwachungsvorgang bestimmt wird, einen selben Betriebszustandsparameter einschließt wie der Betriebszustand des Hostcomputers (20a), der durch den zweiten Überwachungsvorgang bestimmt wird.

3. Druckersystem (18a) nach Anspruch 1 oder 2, wobei der Betriebszustand des Druckercomputers, der durch den ersten Überwachungsvorgang bestimmt wird, einen selben Betriebszustandsparameter einschließt wie der Betriebszustand des Druckers (30a), der durch den zweiten Überwachungsvorgang bestimmt wird.

4. Druckersystem (18a) nach einem der Ansprüche 1 bis 3, wobei der Kommunikationszustand der Kommunikationsleitung, der durch den ersten Überwachungsvorgang bestimmt wird, einen selben Kommunikationszustandsparameter einschließt wie der Kommunikationszustand der Kommunikationsleitung, der durch den zweiten Überwachungsvorgang bestimmt wird.

5. Druckersystem (18a) nach einem der Ansprüche 1 bis 4, wobei der Betriebszustand des Hostcomputers (20a), der durch den zweiten Überwachungsvorgang bestimmt wird, eine Menge von Druckdaten, die von der zweiten Steuereinheit (34) als vom Hostcomputer (20a) aus übertragen erkannt werden, und eine Menge von Druckdaten einschließt, die von der Hostüberwachungssoftware (32a) als vom Drucker (30a) empfangen erkannt werden.

6. Druckersystem (18a) nach einem der Ansprüche 1 bis 5, wobei
die erste Steuereinheit (44) des Hostcomputers (20a) den ersten Überwachungsvorgang auf die Übertragung einer Druckanweisung an den Drucker (30a) hin startet, und
die zweite Steuereinheit (34) des Druckers (30a) den zweiten Überwachungsvorgang auf den Empfang der Druckanweisung vom Hostcomputer (20a) hin startet.

7. Druckersystem (18b), umfassend:
einen Hostcomputer (20b), der konfiguriert ist, um Druckdaten zu erzeugen und zu übertragen; und
einen Drucker (30b), der mit dem Hostcomputer über eine Kommunikationsleitung (L) verbunden und konfiguriert ist, um die Druckdaten zu empfangen und basierend auf den Druckdaten zu drucken, wobei
der Hostcomputer (20b) einschließt:
eine erste Kommunikationsschnittstelle (69), die mit dem Drucker (30b) verbunden ist;
eine Anzeige (29); und
eine erste Steuereinheit (44) zu Steuern des Druckers (30b), die konfiguriert ist, um einen ersten Überwachungsvorgang zum Bestimmen von Betriebszuständen des Hostcomputers (20b) und des Druckers (30b) und des Kommunikationszustandes der Kommunikationsleitung (L) im Zusammenhang mit einer überwachten Zeit durchzuführen und um ein Ergebnis des ersten Überwachungsvorganges im Zusammenhang mit der überwachten Zeit zu speichern,
wobei der Drucker (30b) einschließt:
eine zweite Kommunikationsschnittstelle, die mit dem Hostcomputer (20b) verbunden ist, und
eine zweite Steuereinheit (34) zum Überwachen des Hostcomputers, die konfiguriert ist, um einen zweiten Überwachungsvorgang zum Bestimmen von Betriebszuständen des Hostcomputers (20b) und des Druckers (30b) und eines Kommunikationszustandes der Kommunikationsleitung im Zusammenhang mit einer überwachten Zeit durchzuführen, um ein Ergebnis des zweiten Überwachungsvorganges im Zusammenhang mit der überwachten Zeit zu speichern und um die zweite Kommunikationsschnittstelle so zu steuern, dass sie ein Ergebnis des zweiten Überwachungsvorganges über die Kommunikationsleitung (L) an den Hostcomputer (20b) überträgt, und
die erste Steuereinheit (44) konfiguriert ist, um die Anzeige (29) so zu steuern, dass sie das gespeicherte Ergebnis des ersten Überwachungsvorganges und das vom Drucker (30b) empfangene gespeicherte Ergebnis des zweiten Überwachungsvorganges anzeigt.

8. Druckersystem (18b) nach Anspruch 7, wobei der Betriebszustand des Hostcomputers (20b), der durch den ersten Überwachungsvorgang bestimmt wird, einen selben Betriebszustandsparameter einschließt wie der Betriebszustand des Hostcomputers (20b), der durch den zweiten Überwachungsvorgang bestimmt wird.

9. Druckersystem (18b) nach Anspruch 7 oder 8, wobei der Betriebszustand des Druckercomputers, der durch den ersten Überwachungsvorgang bestimmt wird, einen selben Betriebszustandsparameter einschließt wie der Betriebszustand des Druckers (30b), der durch den zweiten Überwachungsvorgang bestimmt wird.

10. Druckersystem (18b) nach einem der Ansprüche 7 bis 9, wobei der Kommunikationszustand der Kommunikationsleitung, der durch den ersten Überwachungsvorgang bestimmt wird, einen selben Kommunikationszustandsparameter einschließt wie der Kommunikationszustand der Kommunikationsleitung, der durch den zweiten Überwachungsvorgang bestimmt wird.

11. Druckersystem (18b) nach einem der Ansprüche 7 bis 10, wobei der Betriebszustand des Hostcomputers (20b), der durch den zweiten Überwachungsvorgang bestimmt wird, eine Menge von Druckdaten, die von der zweiten Steuereinheit (34) als vom Hostcomputer (20b) übertragen erkannt werden, und eine Menge von Druckdaten einschließt, die von der zweiten Steuereinheit (34) als durch den Drucker (30b) empfangen erkannt werden.

12. Druckersystem (18b) nach einem der Ansprüche 7 bis 11, wobei
die erste Steuereinheit (44) des Hostcomputers (20b) den ersten Überwachungsvorgang auf die Übertragung einer Druckanweisung an den Drucker (30b) hin startet, und
die zweite Steuereinheit (34) des Druckers (30b) den zweiten Überwachungsvorgang auf den Empfang der Druckanweisung vom Hostcomputer (20b) hin startet.

13. Druckersystem (18b) nach einem der Ansprüche 7 bis 12, wobei die Anzeige das Ergebnis des ersten Überwachungsvorganges und das Ergebnis des zweiten Überwachungsvorganges auf einem selben Bildschirm anzeigt.

14. Druckersystem (18c), umfassend:
einen Hostcomputer (20c), der konfiguriert ist, um Druckdaten zu erzeugen und zu übertragen; und
einen Drucker (30c), der mit dem Hostcomputer (20c) über eine Kommunikationsleitung (L) verbunden und konfiguriert ist, um die Druckdaten zu empfangen und basierend auf den Druckdaten zu drucken, wobei
der Hostcomputer (20c) einschließt:
eine erste Kommunikationsschnittstelle, die mit dem Drucker (30c) verbunden ist; und
eine erste Steuereinheit (44) zum Steuern des Druckers, die konfiguriert ist, um einen ersten Überwachungsvorgang zum Bestimmen von Betriebszuständen des Hostcomputers (20c) und des Druckers (30c) und eines Kommunikationszustandes der Kommunikationsleitung im Zusammenhang mit einer überwachten Zeit durchzuführen, um ein Ergebnis des ersten Überwachungsvorganges im Zusammenhang mit der überwachten Zeit zu speichern und um die erste Kommunikationsschnittstelle so zu steuern, dass sie das gespeicherte Ergebnis des ersten Überwachungsvorganges über die Kommunikationsleitung (L) an den Drucker (30c) überträgt,
der Drucker (30c) einschließt:
eine zweite Kommunikationsschnittstelle, die mit dem Hostcomputer (20c) verbunden ist;
eine Anzeige (39); und
eine zweite Steuereinheit (34) zum Überwachen des Hostcomputers (20c), die konfiguriert ist, um einen zweiten Überwachungsvorgang zum Bestimmen von Betriebszuständen des Hostcomputers (20c) und des Druckers (30c) und eines Kommunikationszustandes der Kommunikationsleitung (L) im Zusammenhang mit einer überwachten Zeit durchzuführen, um ein Ergebnis des zweiten Überwachungsvorganges im Zusammenhang mit der überwachten Zeit zu speichern und um die Anzeige (39) so zu steuern, dass sie das vom Hostcomputer (20c) empfangene gespeicherte Ergebnis des ersten Überwachungsvorganges und das gespeicherte Ergebnis des zweiten Überwachungsvorganges anzeigt.

15. Druckersystem (18c) nach Anspruch 14, wobei die Anzeige (39) das Ergebnis des ersten Überwachungsvorganges und das Ergebnis des zweiten Überwachungsvorganges, die empfangen wurden, auf einem selben Bildschirm anzeigt.

## Revendications

1. Un système d'impression (18a), comprenant :
un ordinateur hôte (20a) configuré pour générer et transmettre des données d'impression ; et
une imprimante (30a) connectée à l'ordinateur hôte via une ligne de communication (L) et configurée pour recevoir les données d'impression et effectuer l'impression sur la base des données d'impression, dans laquelle
l'ordinateur hôte (20a) comprend :
une première interface de communication (69) connectée à l'imprimante (30a) ;
un premier écran (29) ; et
une première unité de commande (44) pour commander l'imprimante, configurée pour effectuer une première opération de surveillance afin de déterminer des états de fonctionnement de l'ordinateur hôte (20a) et de l'imprimante (30a) et un état de communication de la ligne de communication en association avec un temps de surveillance, pour enregistrer un résultat de la première opération de surveillance associée au temps de surveillance et pour commander le premier écran (29) afin d'afficher le résultat enregistré de la première opération de surveillance, et
l'imprimante (30a) comprend :
une deuxième interface de communication connectée à l'ordinateur d'hôte ;
un deuxième écran (39) ; et
une deuxième unité de commande (34) pour la surveillance de l'ordinateur hôte configuré pour effectuer une deuxième opération de surveillance afin de déterminer des états de fonctionnement de l'ordinateur hôte (20a) et de l'imprimante (30a) et un état de communication de la ligne de communication en association avec un temps de surveillance, pour enregistrer un résultat de la deuxième opération de surveillance associé au temps de surveillance, et pour commander le deuxième écran (39) afin d'afficher le résultat enregistré de la deuxième opération de surveillance.

2. Système d'impression (18a) selon la revendication 1, dans lequel
l'état de fonctionnement de l'ordinateur hôte (20a) déterminé par la première opération de surveillance comprend un même paramètre d'état de fonctionnement que l'état de fonctionnement de l'ordinateur hôte (20a) déterminé par la deuxième opération de surveillance.

3. Système d'impression (18a) selon la revendication 1 ou 2,
dans lequel l'état de fonctionnement de l'ordinateur de l'imprimante déterminé par la première opération de surveillance comprend un même paramètre d'état de fonctionnement que l'état de fonctionnement de l'imprimante (30a) déterminé par la deuxième opération de surveillance.

4. Le système d'impression (18a) selon l'une des revendications
1 à 3, dans lequel l'état de communication de la ligne de communication déterminé par la première opération de surveillance comprend un même paramètre d'état de communication que l'état de communication de la ligne de communication déterminé par la deuxième opération de surveillance.

5. Le système d'impression (18a) selon l'une des revendications 1 à 4, dans lequel l'état de fonctionnement de l'ordinateur hôte (20a) déterminé par la seconde opération de surveillance comprend une quantité de données d'impression reconnue par la seconde unité de commande (34) comme étant transmise par l'ordinateur hôte (20a) et une quantité de données d'impression reconnue par le logiciel de surveillance de l'hôte (32a) comme étant reçue par l'imprimante (30a).

6. Le système d'impression (18a) selon l'une des revendications 1 à 5, dans lequel la première unité de commande (44) de l'ordinateur hôte (20a) lance la première opération de surveillance lors de la transmission d'une instruction d'impression à l'imprimante (30a), et la deuxième unité de commande (34) de l'imprimante (30a) lance la deuxième opération de surveillance lors de la réception de l'instruction d'impression de l'ordinateur hôte (20a).

7. Système d'impression (18b) comprenant
un ordinateur hôte (20b) configuré pour générer et transmettre des données d'impression ; et
une imprimante (30b) connectée à l'ordinateur hôte via une ligne de communication (L) et configurée pour recevoir les données d'impression et effectuer l'impression sur la base des données d'impression, dans laquelle
l'ordinateur hôte (20b) comprend :
une première interface de communication (69) connectée à l'imprimante (30b) ;
un écran (29) ; et
une première unité de commande (44) pour commander l'imprimante (30b) configurée pour effectuer une première opération de surveillance afin de déterminer les états de fonctionnement de l'ordinateur hôte (20b) et de l'imprimante (30b) et un état de communication de la ligne de communication (L) en association avec un temps de surveillance, et pour enregistrer un résultat de la première opération de surveillance associé au temps de surveillance,
l'imprimante (30b) comprend :
une deuxième interface de communication connectée à l'ordinateur hôte (25b), et ;
une deuxième unité de commande (34) pour surveiller l'ordinateur hôte, configurée pour effectuer une deuxième opération de surveillance afin de déterminer des états de fonctionnement de l'ordinateur hôte (20b) et de l'imprimante (30b) et un état de communication de la ligne de communication en association avec un temps de surveillance, pour enregistrer un résultat de la seconde opération de surveillance associé avec le temps de surveillance, et pour commander la seconde interface de communication pour transmettre un résultat de la seconde opération de surveillance à l'ordinateur hôte (20b) par l'intermédiaire de la ligne de communication (L), et la première unité de commande (44) est configurée pour commander l'écran (29) pour afficher le résultat enregistré de la première opération de surveillance et le résultat enregistré de la deuxième opération de surveillance reçu de l'imprimante (30b).

8. Système d'impression (18b) selon la revendication 7, dans lequel l'état de fonctionnement de l'ordinateur hôte (20b) déterminé par la première opération de surveillance comprend un même paramètre d'état de fonctionnement que l'état de fonctionnement de l'ordinateur hôte (20b) déterminé par la deuxième opération de surveillance.

9. Système d'impression (18b) selon la revendication 7 ou 8, dans lequel l'état de fonctionnement de l'ordinateur de l'imprimante déterminé par la première opération de surveillance comprend un même paramètre d'état de fonctionnement que l'état de fonctionnement de l'imprimante (30b) déterminé par la deuxième opération de surveillance.

10. Système d'impression (18b) selon l'une des revendications 7 à 9, dans lequel l'état de communication de l'opération de surveillance comprend un paramètre d'état de communication identique à l'état de communication de la ligne de communication déterminé par la seconde opération de surveillance.

11. Système d'impression (18b) selon l'une des revendications 7 à 10, dans lequel l'état de fonctionnement de l'ordinateur hôte (20b) déterminé par la deuxième opération de surveillance comprend une quantité de données d'impression reconnues par la deuxième unité de commande (34) comme étant transmises par l'ordinateur hôte (20b) et une quantité de données d'impression reconnues par la deuxième unité de commande (31) comme étant reçues par l'imprimante (30b).

12. Système d'impression (18b) selon l'une des revendications 7 à 11, dans lequel la première unité de commande (44) de l'ordinateur hôte (20b) lance la première opération de surveillance lors de la transmission d'une instruction d'impression à l'imprimante (30b), et la deuxième unité de commande (34) de l'imprimante (30b) lance la seconde opération de surveillance lors de la réception de l'instruction d'impression en provenance de l'ordinateur hôte (20b).

13. Le système d'impression (18b) selon l'une des revendications 7 à 12, dans lequel l'écran affiche le résultat de la première opération de surveillance et le résultat de la deuxième opération de surveillance reçus sur le même écran.

14. Système d'impression (18c) comprenant :
un ordinateur hôte (20c) configuré pour générer et transmettre des données d'impression ; et
une imprimante (30c) connectée à l'ordinateur hôte (20c) via une ligne de communication (L) et configurée pour recevoir les données d'impression et effectuer l'impression sur la base des données d'impression, dans lequel
l'ordinateur hôte (20c) comprend :
- une première interface de communication connectée à l'imprimante (30c) ; et
une première unité de commande (44) pour commander l'imprimante, configurée pour effectuer une première opération de surveillance afin de déterminer des états de fonctionnement de l'ordinateur hôte (20c) et de l'imprimante (30c) ; et
un état de communication de la ligne de communication en association avec un temps de surveillance, pour enregistrer un résultat de la première opération de surveillance associée au temps de surveillance, et pour commander la première interface de communication afin de transmettre le résultat enregistré de la première opération de surveillance à l'imprimante (30c) par l'intermédiaire de la ligne de communication (L)
l'imprimante (30c) comprend :
une seconde interface de communication connectée à l'ordinateur hôte (20c) ;
un écran (39) ; et
une deuxième unité de commande (34) pour surveiller l'ordinateur hôte (20c), configurée pour effectuer une deuxième opération de surveillance afin de déterminer des états de fonctionnement de l'ordinateur hôte (20c) et de l'imprimante (30c) et un état de communication de la ligne de communication (L) en association avec un temps de surveillance, pour enregistrer un résultat de la deuxième opération de surveillance associé au temps de surveillance, et pour commander l'écran (39) afin d'afficher le résultat enregistré de la première opération de surveillance reçue de l'ordinateur hôte (20c) et le résultat enregistré de la deuxième opération de surveillance.

15. Système d'impression (18c) selon la revendication 14, dans lequel l'écran (39) affiche le résultat de la première opération de surveillance et le résultat de la deuxième opération de de surveillance reçus sur un même écran.
